Europäisches Patentamt

**European Patent Office**

Office européen des brevets

(11) Publication number: **0 136 165**
A2

# EUROPEAN PATENT APPLICATION

(21) Application number: 84306496.5

(51) Int. Cl.⁴: **A 01 C 7/08**

(22) Date of filing: **24.09.84**

(30) Priority: **23.09.83 GB 8325559**

(43) Date of publication of application: **03.04.85**
**Bulletin 85/14**

(84) Designated Contracting States: **DE FR GB**

(71) Applicant: **FALCON AGRICULTURAL MACHINERY LIMITED, Great Haywood, Stafford ST18 0ST (GB)**

(72) Inventor: **Parsons, Colin Michael, 6, Ferrers Road, Weston Staffordshire (GB)**

(74) Representative: **Newby, John Ross et al, J.Y. & G.W. Johnson Furnival House 14/18 High Holborn, London WC1V 6DE (GB)**

(54) **Improved seed drill and seeding method.**

(57) A cultivator drill includes a tilth cultivator comprising two rows (11, 12) of tines (15) creating discrete seed tacks in the ground and a seed hopper (16) feeding via seed tubes (17), two rows of coulters (13, 14) also based on tines (15). The coulter tines follow the respective seed tracks created by the tilth cultivator tines. A helical roller (18) can press the soil over the seeded tracks.

EP 0 136 165 A2

- 1 -

Improved seed drill and seeding method

This invention relates to an improved cultivator drill which is robust, simple in design and construction, and to an improved method of seeding a tract of soil.

Traditionally, a cultivator drill comprises first ground-engaging members to open the ground to receive seed, means to feed seed from a reservoir thereof to the opened ground and second ground-engaging members to close the ground over the planted seed.

The first ground-engaging members are commonly referred to as coulters and most manufacturers of cultivator drills make available a range of different coulters for different applications. Thus disc coulters are known in which the ground is cut open with a rotatable disc, "Suffolk" coulters which use a fixed leading knife edge and tine coulters which comprise a tapered shoe mounted at the lower end of an arcuate blade-spring support. Most conventional coulters include a seed tube as an integral part and generally are expensive to install initially in the drill and difficult to maintain in prime operating condition in a typical farm environment.

The cost of each coulter and its reliability in operation becomes more significant the greater the number of coulters there are on a drill and with a trend towards wider and wider drills, and thus more and more coulters per machine, the coulter cost becomes a significant factor in the overall cost of the drill.

Most wide trailer drills use large diameter tyred wheels to support the drill behind the tractor trailing it and these wheels compact the soil below them to a more than desirable extent. To combat this it is known to support the drill on a roll extending the full width of the drill and locating such a roll downstream of the coulters enables it to be used as the second ground-engaging member closing the ground over the planted seed.

It is known from UK-A-1515929 to use, in a tractor-supported seed drill, a spaced-apart pair of rows of tines to open the ground for seeding and to reciprocate these rows of tines transversely of the direction of motion of the tractor to form a power harrow. Behind the reciprocating rows of tines, the known drill has a seed chute and behind the seed chute, a ground roller which can be a cage roller. Between the tines in the trailing row, the known drill supports spring tines so that effectively three rows of reciprocating tines are provided upstream of the seed chute to fully break up the soil over the full width of the drill and substantially aerate it prior to seeding. Cultivating the full drill width of the soil in this way consumes a significant amount of available tractor power and ensures that the drilling speed cannot exceed 3.2 to 4.8 kph (2-3 mph).

The drill disclosed in UK-A-1515929 mounts the tines so that they extend vertically from the ground and shapes each tine so that its lower end curves forwardly.

Since the drill of UK-A-1515929 is supported by the three-point linkage of the tractor, the axis of the rear roller is wound down from the frame of the drill to the extent necessary to give the required degree of soil compaction after seeding, but in practice, when operating the drill on typical farm terrain, this soil compaction force is constantly varying as the tractor rides over the ground. The drill described in UK-A-1515929 is primarily intended for general broadcasting of seed on the cultivated tract (e.g. for grass seeding) and is not suitable for the accurate placement of seeds in rows.

This invention relates to an improved drill which, like the drill described in UK-A-1515929 uses tines as a tilth cultivator, but which uses the tines in a novel way and with reduced power consumption to prepare the ground for seeding. Further, a seed drill in accordance with the invention, since it effectively cultivates only the ground along the seed rows, can operate at speeds of 8 kph (5 mph) or even above.

A drill in accordance with this invention desirably uses a rear roller to carry the weight of the drill thus ensuring a much more uniform compaction of the soil after seeding and in turn faster germination and more uniform seed start.

What constitutes a drill in accordance with the invention can be taken from the following claim 1 and what constitutes the method of the invention can be taken from the following claim 7.

Suitably, there are four rows of tines, the first two rows providing the tilth cultivator and effecting an initial localised break-up of the soil and the last two rows of tines generating new "bow waves" in the soil into each of which the respective seed tube can periodically drop seed.

A significant advantage of a drill according to the invention resides in the fact that each tine can be very cheap to produce and mount and requires virtually no maintenance. A length of rigid metal rod or bar will make a very suitable tine for employment in a drill in accordance with the invention and the tines of each row can be clamped to a transverse beam of a frame of the drill which can be axially turnable to adjust the "angle of attack" of each tine in that row.

Generally we find the best pre-seeding ground- working conditions occur when the lower end of each tine trails behind its upper end. The angle of the tines to the vertical as measured on the leading side of the tine (hereafter referred to as the "angle of attack") can range from about 5° to 45°.

Preferably where a ground-engaging roller is provided, it is suitably a helical roller formed from a bar disposed helically around the roller axis. The bar of the helical roller can be of angle iron with the 90° angle of the bar disposed radially outermost. Such a roller is relatively light in weight and spreads the weight of the drill over the entire width of the drill, gently working the soil downstream of the seed tubes and pressing the soil onto the planted seed.

A drill in accordance with the invention could be six metres long and to facilitate its movement onto and off narrow roads through conventional farm gates, it can be provided with a pair of transport wheels mounted at one end of the drill, which wheels can be lifted when drilling is underway and lowered to support the rear end of the drill when the latter is trailed from field to field. The transport wheels are preferably steerable to reduce the turning circle of the towed drill.

Among the advantages that result from the method of the invention may be mentioned the reduced power consumption (resulting from selective soil cultivation just along the seed tracks), the option for faster sowing rates than is conveniently possible and the more uniform germination of the seed which results from optimum placement of each seed in soil of good tilth.

One embodiment of cultivator drill in accordance with the invention will now be described, by way of example, with reference to the accompanying drawings, in which:-

Figure 1 is a schematic partial perspective view of the drill,

Figure 2 is a schematic plan, from above, showing the drill and the ground effect produced by the rows of tines,

Figure 3 is a schematic side elevation of Figure 2,

Figures 4a to 4d show scrap side elevations of four different arrangements of seed tube for the drill,

Figure 5 shows one of the transport wheels for the drill as seen from the rear of the drill, and

Figure 6 shows the two transport wheels from above and the manner in which these can be steered.

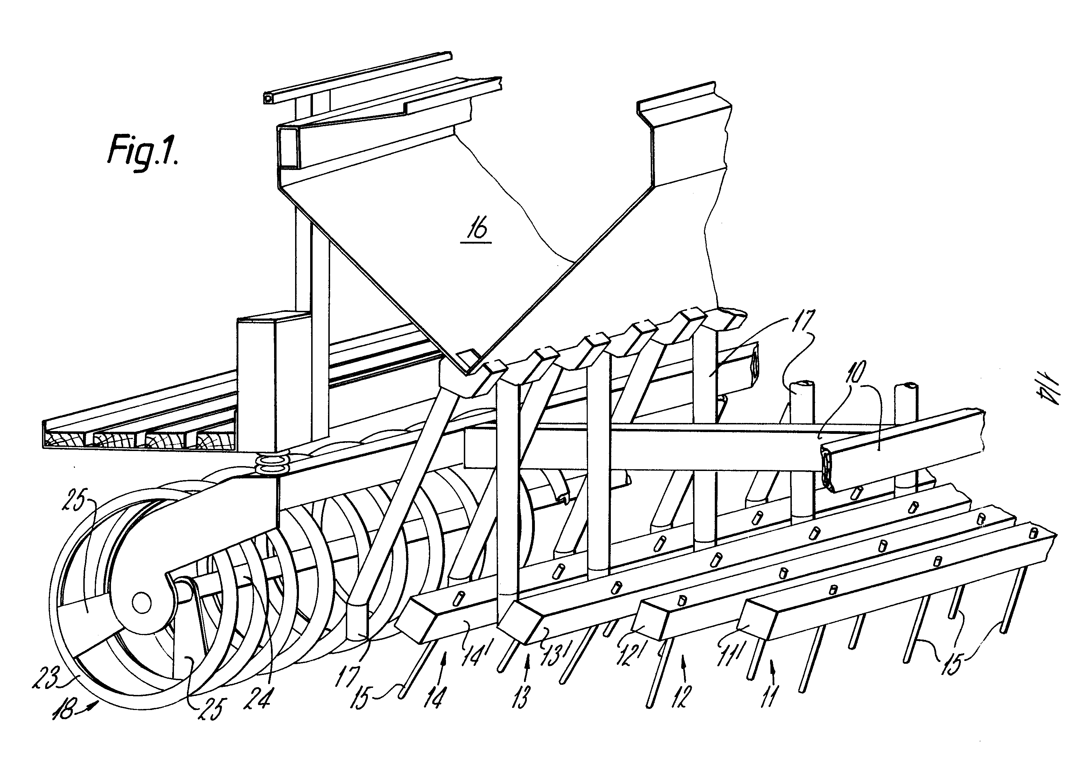

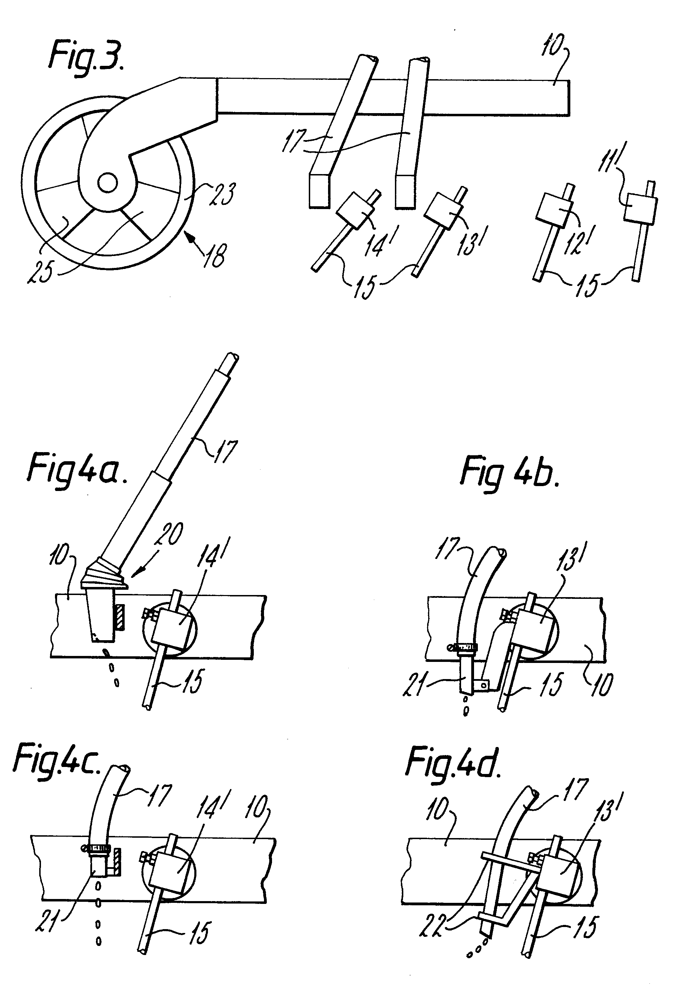

The grain drill shown in Figure 1 comprises a frame 10, four rows 11-14 of "Dutch" harrow tines 15, a seed hopper 16, a plurality of seed tubes 17 and a rear roller 18. The tines 15 in each row are some 30 cms long and 2 cms in diameter (although rigid bars of other lengths and cross-sections could equally well be used) and are clamped to a transverse bar 11'-14'. Each bar 11'-14' can be swivelled about its longitudinal axis in the frame 10 to adjust the angle of attack of the tines 15 in each row. A range of possible angles of attack are shown in Figure 3 between about 10° for row 11 to about 40° for row 14. The optimum angles of attack will be a function of soil type, soil condition and seed being sown and can be determined empirically. In practice it is not expected that different angles of attack will be used for each row, Figure 3 being purely illustrative in this respect.

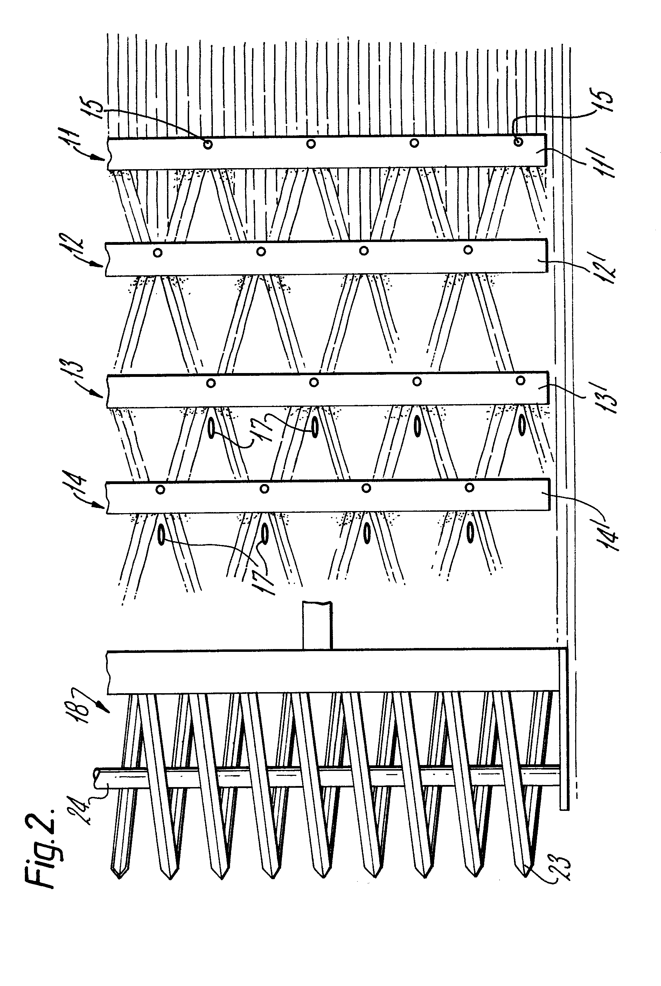

Figure 2 illustrates how the drill works. Downstream of each row of tines 15, the soil is opened in an outwardly diverging track or "bow wave" when the drill speed through the ground is at least a few kilometres an hour (the preferred drilling speed is around 6.5 to 8 kph (4 to 5 mph)). The generation of the two rows of "bow waves" in the soil by the tilth cultivator rows 11 and 12 is important as is the overlapping of the "bow waves" from row 12 and the "bow waves" from row 11. Each tine 15 in the rows 11 and 12 breaks up the soil ready for its respective "tracking" by the two later rows 13 and 14 of coulter tines.

The angle of attack will invariably be a positive angle less than 45° for the coulter tines and although the leading rows of tines could be set to have a 0° angle of attack (the axis of the tine is vertical) or even a small negative angle of attack (the lower end of the tine leads the upper end), these dispositions would not normally be preferred.

In soil cultivation, a vertical tine, or a tine with a negative angle of attack, when pulled through the soil crushes clod etc. only into the layer of soil in front of it, but it does create a reasonably extensive bow wave or soil lift which can leave the soil with too much air content for the immediate take up of soil moisture by the seed or seedling. Over aeration of the soil wastes valuable tractor power and would be a consequence of a side to side movement of a reciprocating row of tines such as are used in the drill of UK-A-1515929.

When a straight tine has a positive angle of attack, the action of the tine is to consolidate and crush the soil in the immediate vicinity of its own track in a downwards direction. Since this action is very localised, this does not affect overall soil drainage but does establish ideal conditions for seed/soil moisture contact in its own track and does crush all the soil clod existing in the track. Thus, by deliberately using two rows of tines with a positive angle of attack in staggered formation, the soil is crushed, and localised tracks are opened up in the soil by the first row of tines, which are then substantially filled by the adjacent tines in the following row. The trailing pair of coulter tines recreate the two rows of tracks in the lightly worked soil and seed is dropped into each of these recreated tracks before they are refilled.

Thus, despite the simplicity of the coulters used in a drill in accordance with the invention each seed is dropped into an ideal soil environment where it can germinate rapidly and uniformly with all other seeds. Fast germination is clearly highly desirable and uniformity of germination is also of great advantage when during later growing phases it becomes necessary to time the application of growth regulating or insecticide/fungicide chemicals to a particular growth phase of the crop.

Preferably the leading rows 11 and 12 of tines are all set to the same depth so that the tilth created by the tilth cultivator rests on a generally undisturbed bed of soil. The staggering of the rows 11 and 12 is important, not only becuse of the "fold back" of disturbed soil from one seed track onto another but also because there is less tendency for the drill to "bulldoze" soil ahead of the tilth cultivator. The coulter tines in rows 13 and 14 can be set to the same depth as those in the earlier rows but would preferably run at a slightly shallower depth.

Figure 2 also shows a very suitable location for the seed tubes 17 and Figures 4a to 4d how the tubes can be disposed on the frame.

Figure 4a shows the seed tube 17 (here telescopic) terminating in a standard cone boot 20 of oval cross-section. Figures 4b and 4c show semi-flexible tubes 17 terminating in rigid pipes 21 of circular cross-section with different arrangements for mounting the pipe 21 on the frame. Figure 4d shows seed dropping from the end of a semi-flexible tube 17 held in a pair of rigid retainer loops 22.

The precise arrangement used to convey the seeds one by one from an accurate seed metering device in the hopper 16, to the downstream vicinity of the respective coulter tine is not critical, provided the seed is reliably conveyed with a predictable transit time and individual seeds are dropped in the "bow wave" created by the immediately upstream tine 15 at the correct spacings.

Figure 2 shows the roller 18 formed from a helical length of angle iron 23 surrounding a central shaft 24. Radial supports 25 are provided at intervals along the shaft 24 to support the angle iron 23. The roller 18 provides the drive for the seed metering mechanism (not shown) in the hopper 16 and carries the weight of the drill. Its helical shape lightly works the soil to destroy the tracks formed by the tines 15.

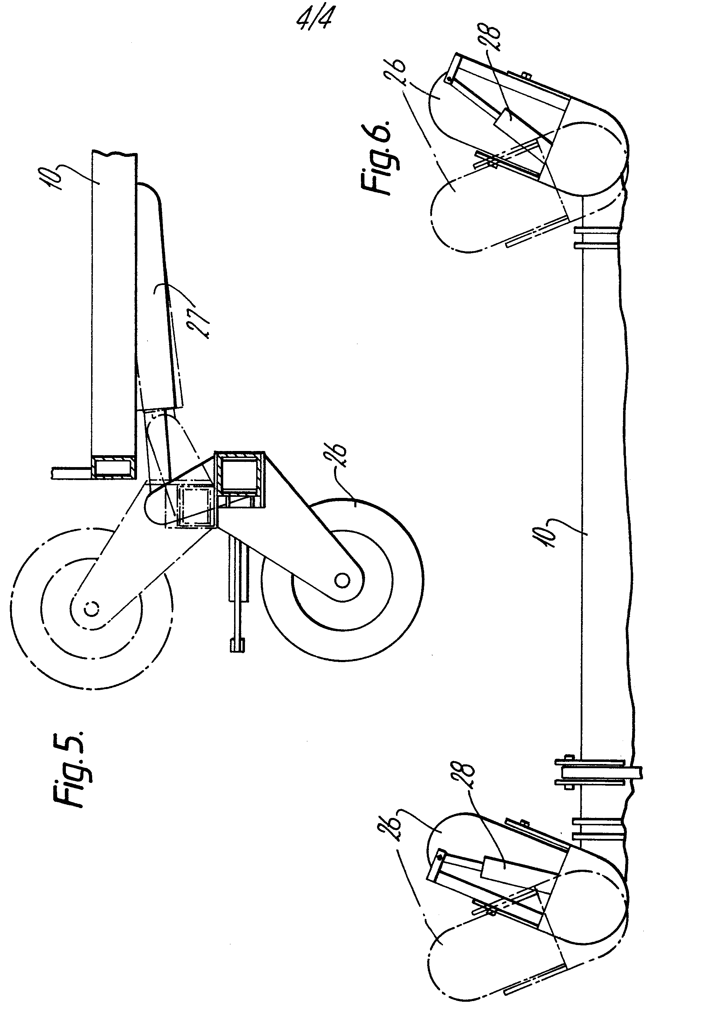

Figure 5 shows one of the pair of transport wheels 26 at one side of the drill in its lower position (shown in full lines) and its upper position (shown in dash lines). Clearly, in their upper position the wheels 26 are ineffective to support the drill and are positioned where they do not affect the operation of the drill. In their lower position they support one end of the drill allowing it to be towed endwise off the field. A ram 27 mounted below the frame 10 is used to turn both wheels together from the upper to the lower transport position.

To give the drill a smaller turning circle the transport wheels 26 are steerable as shown in Figure 6. The steering mechanism is open to wide variation but the arrangement shown (i.e. using a pair of hydraulic rams 28) is one convenient way of steering these wheels remotely from the cab of the towing tractor.

It will be appreciated that a tine operating with a positive angle of attack (particularly an angle less than 30°) requires a given amount of downward pressure to maintain a certain depth. In practice, we have found this pressure to be remarkably consistent, being influenced in the main by soil condition, e.g. wet or dry, forward speed and the angle of attack. The tines 15 are cheap and easy to replace when worn or damaged but to avoid the need for too frequent replacement of bent tines it is desirable to provide a resilient mounting for the tines. Using springs of a known tension, the depth of the seed track can be maintained very simply by hydraulic or mechanical means. The use of springs ensure that immovable objects struck by a tine during drilling will be ridden over without damage to the drill.

CLAIMS

1.    A cultivator drill comprising a leading row and a trailing row of tines to provide a tilth cultivator, and downstream of the tilth cultivator, in the direction of seeding, a leading row of coulters spaced-apart across the drill and a trailing row of coulters spaced-apart across the drill, each coulter acting to deposit seed fed to it into soil worked by the rows of tines, characterised in that the tines (15) in the trailing row (12) are interposed between the tines (15) in the leading row (11) and each coulter (15, 17) in the respective leading (13) and trailing (14) row of coulters is, in the direction of seeding, substantially aligned with a tine (15) in the respective leading (11) and trailing (12) rows of tines, and in that the coulters are tines (15) with closely adjacent downstream seed tubes (17).

2.    A drill as claimed in claim 1, characterised in that the tines (15) in each row are mounted on a frame part (11', 12') of the drill which permits the angle of attack of all the tines (15) in a row to be adjusted together.

3.    A drill as claimed in claim 1 or claim 2, characterised in that each tine (15) is resiliently mounted on its respective tine bar (11'-14') whereby it can deflect clear of any obstruction.

4.    A drill as claimed in any of claims 1 to 3, having, downstream of the trailing row of coulters, in the direction of seeding, a roller to press the soil over the seed, characterised in that the roller (18) has a helical ground-engaging member (23).

5.    A drill as claimed in any one of claims 1 to 4, in which transport wheels are provided on one side of the drill with means to lift the wheels clear of the ground during seeding and lower them to take the weight of the trailing end of the drill during towing by a towing vehicle between seeding operations, <u>characterised in that</u> the transport wheels (26) are provided with means (28), operable from the cab of the towing vehicle, to steer them and thereby improve the manoeuvrability of the towed drill.

6. A drill as claimed in any of claims 1 to 5, <u>characterised in that</u> the leading (11) and trailing (12) rows of tines (15) are adapted to be lifted clear of the ground to allow movement of the drill without soil engagement by the tilth cultivator.

7. A method of seeding a tract of soil comprising drawing a leading row and a trailing row of tines through the soil to prepare the soil for seed and depositing seed into the prepared soil, <u>characterised in that</u> the tines (15) in the leading row (11) form a first series of parallel spaced-apart rectilinear seed tracks in the soil, the tines of the trailing row (12) form a second series of parallel spaced-apart rectilinear seed tracks in the soil, at least most of the second seed tracks being disposed between the first seed tracks, and in that each seed is deposited downstream of the trailing row (12) of tines behind a tine running through the soil in substantial alignment with a respective seed track. .

8. A method as claimed in claim 1, <u>characterised in that</u> the rows (11, 12) of tines (15) are drawn through the soil at a speed sufficient to generate a bow wave in the soil downstream of each row of tines, the trailing row (12) of tines redistributing with its bow waves, the soil distribution caused by the bow waves of the leading row (11) of tines before the seed is deposited in substantial alignment with the first series of seed tracks.

- 12 -

9.　A method as claimed in claim 7 or claim 8, characterised in that the seed is deposited immediately downstream of respective third (13) and fourth (14) rows of rigid tines (15), the tines in the third row (13) being aligned with the seed tracks created by the tines in the leading row (11) and the tines in the fourth row (14) being aligned with the seed tracks created by the tines in the trailing row (12).

10.　A method as claimed in any of claims 7 to 9, characterised in that a helical ground-engaging bar (23) forming the contact surface of a roller (18) is used to press the soil onto the seed.

Fig.1.

16

17

10

1/4

25

23

18

25

24

17

15

14

14'

13

13'

12

12'

11

11'

15

0136165

Fig.2.

0136165

Fig.3.

Fig4a.

Fig 4b.

Fig.4c.

Fig.4d.

Fig.5.

27

10

26

4/4

Fig.6.

26

26

28

28

10

0136165